# EUROPEAN PATENT APPLICATION

(11) **EP 2 065 773 A2**
(43) Date of publication of application: **03.06.2009**
(21) Application number: 08169665.0
(22) Date of filing: 21.11.2008
(51) Int. Cl.: G05B 23/02

(54) **Vehicle diagnosis method and system**

(30) Priority: 26.11.2007 US 990199 P; 10.03.2008 US 45148
(71) Applicant: Honeywell International Inc., Morristown, NJ 07962 (US)
(72) Inventor: Mylaraswamy, Dinkar, Morristown, NJ 07962-2245 (US); Voges, Harold Carl, Morristown, NJ 07962-2245 (US); Olson, Lewis, Morristown, NJ 07962 (US)
(74) Representative: Buckley, Guy Julian

(57) **Abstract**

A method for performing diagnostics on a system of a vehicle includes the steps of receiving a request form an external source, obtaining data relevant to the request, processing the request using the data, and generating a report based at least in part on the processing of the request. The report comprises a diagnostic vector and a life usage vector. The diagnostic vector comprises diagnostic information for the system based at least in part on the processing of the request. The life usage vector comprises information as to usage of the system throughout a life history of the system, based at least in part on the processing of the request.

## Description

### CROSS-REFERENCE TO RELATED APPLICATION

This application claims the benefit of U.S. Provisional Application No. 60/990,199, filed November 26, 2007.

### TECHNCAL FIELD

The present invention generally relates to diagnostic and prognostic methods and systems and, more particularly, to improved methods and systems with an improved protocol for performing diagnostics and prognostics.

### BACKGROUND

Diagnostic and prognostic methods and systems are often used to provide information and predict future conditions or outcomes pertaining to any number of different types of devices, systems, or sub-systems. For example, in the case of aircraft, diagnostic and prognostic methods and systems, such as vehicle health monitoring systems, can be used to provide insights into current and expected future operating conditions, environmental conditions, performance characteristics, and/or various other different types of information relating to the health of a particular system or sub-system of the aircraft.

Generally, the vehicle health monitoring system includes software having a diagnostics and prognostics manager having specific algorithms for deriving diagnostic and prognostic health information for a given system or sub-system of a vehicle. The algorithms are typically organized within the diagnostics and prognostics manager in a manner that is specific to the system or sub-system of the vehicle. Accordingly, the diagnostics and prognostics manager and the algorithms included therein can be difficult to modify, and the configuration thereof can be difficult and dependent upon the skill of the engineering team involved.

Accordingly, there is a need for an improved method for performing or facilitating diagnostics or prognostics, for example that allows for easier modularity and/or configuration and/or improved performance. There is also a need for an improved system for performing or facilitating diagnostics or prognostics, for example that allows for easier modularity and/or configuration and/or improved performance. In addition, there is a need for an improved program product for performing or facilitating diagnostics or prognostics, for example that allows for easier modularity and/or configuration and/or improved performance. Furthermore, other desirable features and characteristics of the present invention will become apparent from the subsequent detailed description of the invention and the appended claims, taken in conjunction with the accompanying Appendix and this background of the invention.

### BRIEF SUMMARY

Accordingly, there In accordance with an exemplary embodiment of the present invention, a method for performing diagnostics on a system of a vehicle is provided. The method comprises the steps of receiving a request form an external source, obtaining data relevant to the request, processing the request using the data, and generating a report based at least in part on the processing of the request. The report comprises a diagnostic vector and a life usage vector. The diagnostic vector comprises diagnostic information for the system based at least in part on the processing of the request. The life usage vector comprises information as to usage of the system throughout a life history of the system, based at least in part on the processing of the request.

In accordance with another exemplary embodiment of the present invention, a program product for performing diagnostics on a system of a vehicle is provided. The program product comprises a program and a computer-readable signal-bearing media. The program is configured to at least facilitate receiving a request form an external source, obtaining data relevant to the request, processing the request using the data, and generating a report based at least in part on the processing of the request. The report comprises a diagnostic vector and a life usage vector. The diagnostic vector comprises diagnostic information for the system based at least in part on the processing of the request. The life usage vector comprises information as to usage of the system throughout a life history of the system, based at least in part on the processing of the request. The computer-readable signal-bearing media bears the program.
In accordance with a further exemplary embodiment of the present invention, a system for performing diagnostics on a system of a vehicle is provided. The system comprises an interface and a processor. The interface is configured to at least facilitate receiving a request form an external source. The processor is configured to at least facilitate obtaining data relevant to the request, processing the request using the data, and generating a report based at least in part on the processing of the request. The report comprises a diagnostic vector and a life usage vector. The diagnostic vector comprises diagnostic information for the system based at least in part on the processing of the request. The life usage vector comprises information as to usage of the system throughout a life history of the system, based at least in part on the processing of the request.

### BRIEF DESCRIPTION OF THE DRAWINGS

FIG. 1 is a functional block drawing of a computer system of a health maintenance system of a vehicle, in accordance with an exemplary embodiment of the present invention;

FIG. 2 is a functional block diagram of a protocol that can be used in connection with a plurality of algorithms in connection with the computer system of FIG. 1, in accordance with an exemplary embodiment of the present invention;

FIG. 3 is a functional block diagram of a plurality of elements of the protocol of FIG. 2, in accordance with an exemplary embodiment of the present invention;

FIG. 4 is a flowchart of a control process for performing diagnostics on a system of a vehicle, that can be implemented in connection with the computer system of FIG. 1 and/or the protocol of FIGS. 2 and 3, in accordance with an exemplary embodiment of the present invention;

FIG. 5 is a functional block diagram of a standard communication language that can be used in conjunction with the process of FIG. 4, the protocol of FIGS. 2 and 3, and the computer system of FIG. 1, in accordance with an exemplary embodiment of the present invention; and

FIG. 6 is a flowchart of a control flow that can be implemented in connection with the computer system of FIG. 1, the protocol of FIGS. 2 and 3, the process of FIG. 4, and the standard communication language of FIG. 5, in accordance with an exemplary embodiment of the present invention.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention.

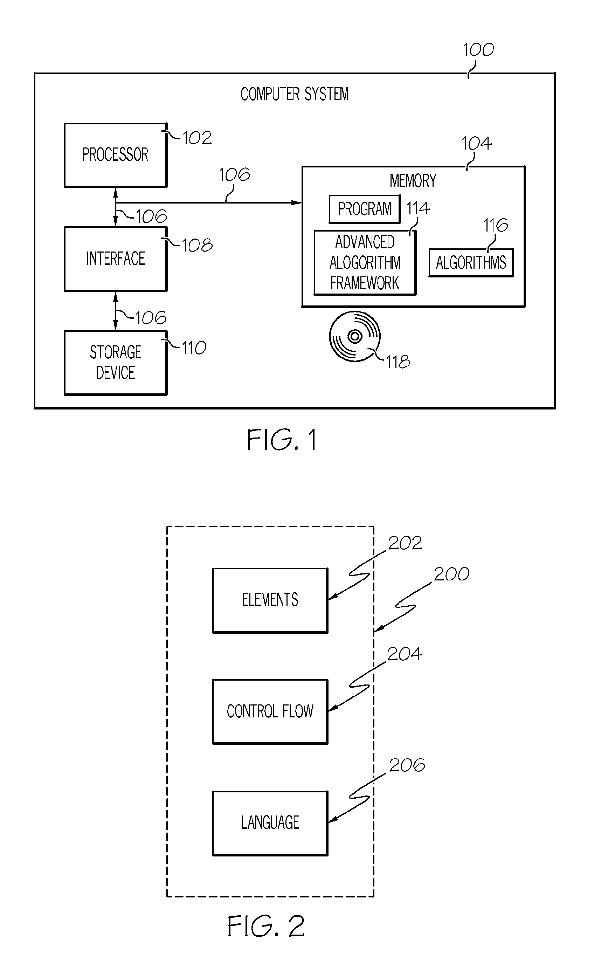

FIG. 1 is a functional block drawing of a computer system 100 of a health maintenance system of a vehicle, in accordance with an exemplary embodiment of the present invention. In the depicted embodiment, the computer system 100 includes a processor 102, a memory 104, a computer bus 106, an interface 108, and a storage device 110. The processor 102 performs the computation and control functions of the computer system, and may comprise any type of processor 102 or multiple processors 102, single integrated circuits such as a microprocessor 102, or any suitable number of integrated circuit devices and/or circuit boards working in cooperation to accomplish the functions of a processing unit.

During operation, the processor 102 executes one or more programs 112 preferably stored within the memory 104 and, as such, controls the general operation of the computer system 100. Such one or more programs 112 are preferably coupled with a computer-readable signal bearing media bearing the product. For example, in certain exemplary embodiments, one or more program products may include the above-described advanced algorithm framework 114, or a portion thereof. Such program products may reside in and/or be utilized in connection with any one or more different types of computer systems, which can be located in a central location or dispersed and coupled via an Internet or various other different types of networks or other communications. In certain other exemplary embodiments, one or more program products may be used to implement an advanced algorithm framework 114 with a plurality of algorithms 116. For example, in certain such exemplary embodiments, the one or more program products may be used to operate the various components of the advanced algorithm framework 114, to connect such components, or to control or run various steps pertaining thereto and the methods referenced above, based on various data such as that described in greater detail above. In a preferred embodiment, the algorithms 116 comprise a variety of different prognostic and diagnostic algorithms.

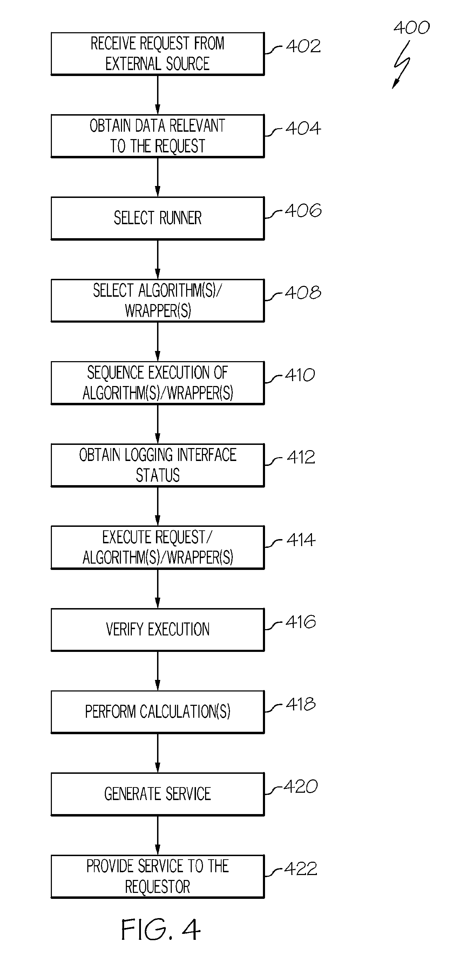

The memory 104 stores a program or programs 112 that execute one or more embodiments of a process for controlling and/or facilitating use of the advanced algorithm framework 114 or a health monitoring system and/or other system or device pertaining thereto, such as those described below, such as the control process depicted in FIG. 4 and described below in connection therewith, and/or for other methods referenced herein. The memory 104 can be any type of suitable memory. This would include the various types of dynamic random access memory (DRAM) such as SDRAM, the various types of static RAM (SRAM), and the various types of nonvolatile memory (PROM, EPROM, and flash). It should be understood that the memory 104 may be a single type of memory component, or it may be composed of many different types of memory components. In addition, the memory 104 and the processor 102 may be distributed across several different computers that collectively comprise the computer system 100. For example, a portion of the memory 104 may reside on a computer within a particular apparatus or process, and another portion may reside on a remote computer.

The computer bus 106 serves to transmit programs 112, data, status and other information or signals between the various components of the computer system 100. The computer bus 106 can be any suitable physical or logical means of connecting computer systems and components. This includes, but is not limited to, direct hard-wired connections, fiber optics, and infrared and wireless bus technologies.

The interface 108 allows communication to the computer system 100, for example from a system operator and/or another computer system, and can be implemented using any suitable method and apparatus. It can include one or more network interfaces to communicate to other systems or components, one or more terminal interfaces to communicate with technicians, and one or more storage interfaces to connect to storage apparatuses such as the storage device 110.

The storage device 110 can be any suitable type of storage apparatus, including direct access storage devices such as hard disk drives, flash systems, floppy disk drives and optical disk drives. In one exemplary embodiment, the storage device 110 is a program product from which memory 104 can receive a program 112 that executes one or more embodiments of a process, such as the control process depicted in FIG. 4 and described below in connection therewith, or that facilitates the operation of such a process or components of advanced algorithm framework 114 or a health monitoring system and/or other system pertaining thereto. The storage device 110 can comprise a disk drive device that uses disks 118 to store data. As one exemplary implementation, the computer system 100 may also utilize an Internet website, for example for providing or maintaining data or performing operations thereon.

It will be appreciated that while this exemplary embodiment is described in the context of a fully functioning computer system 100, those skilled in the art will recognize that the mechanisms of the present invention are capable of being distributed as a program product in a variety of forms, and that the present invention applies equally regardless of the particular type of computer-readable signal bearing media used to carry out the distribution. Examples of signal bearing media include: recordable media such as floppy disks, hard drives, memory cards and optical disks, and transmission media such as digital and analog communication links.

FIG. 2 is a functional block diagram of a protocol 200 that can be used in connection with the advanced algorithm framework 114 and/or the plurality of algorithms 116 described above in connection with the computer system 100 and/or a program product implemented thereby or otherwise related thereto, in accordance with an exemplary embodiment of the present invention. In accordance with an exemplary embodiment of the present invention, the protocol 200 may be used with a computer system, such as the computer system of FIG. 1, in connection with a diagnostics and prognostics system that includes an advanced algorithm framework, such as the advanced algorithm framework 114 depicted in FIG. 1. In one preferred embodiment, the protocol 200 and the advanced algorithm framework 114 are implemented in connection with a program product or software for use in a computer system, such as an exemplary computer system 100 described above in connection with FIG. 1. Also in a preferred embodiment, the protocol 200 allows for a diagnostic and prognostic service to be made available within a system and/or sub-system diagnostic and prognostic manager.

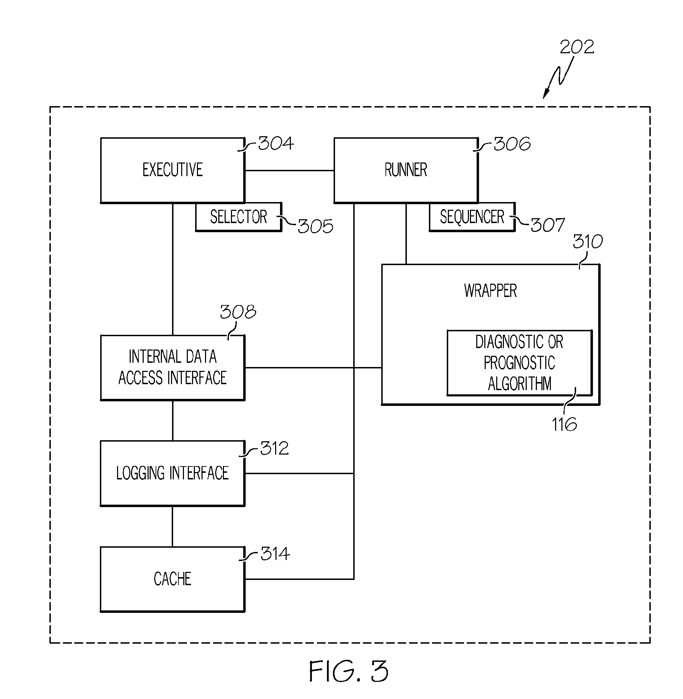

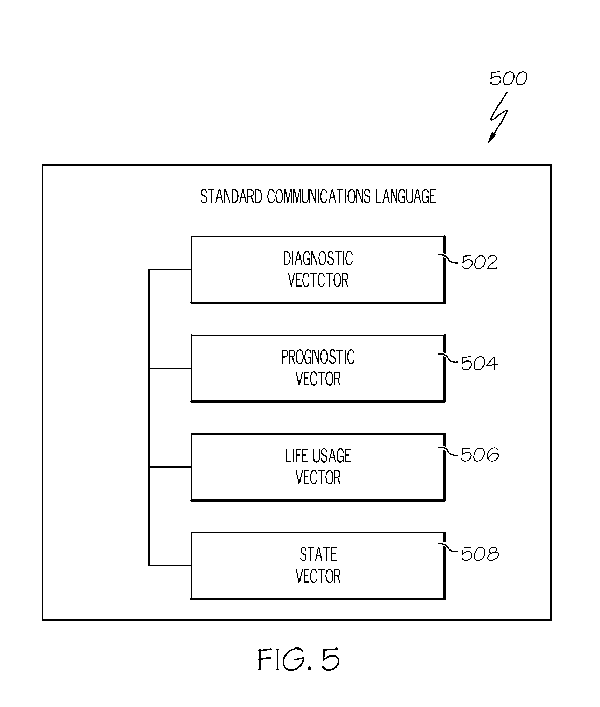

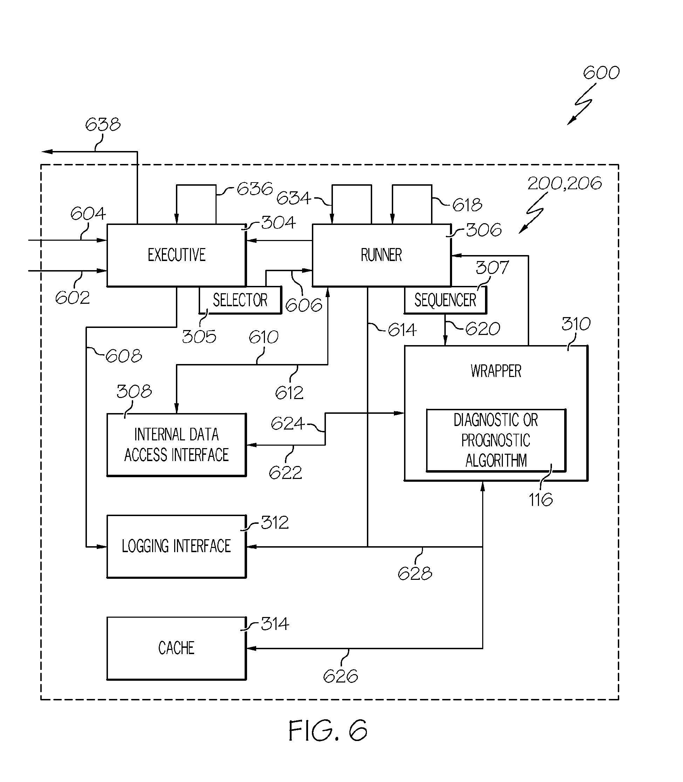

In the depicted embodiment, the protocol 200 includes a plurality of elements 202. Also in the depicted embodiment, the protocol 200 includes a control flow 204 and a language 206. The elements 202, control flow 204, and language 206 of the protocol 200 will be described below in connection with FIGS. 2-7 in accordance with an exemplary embodiment of the present invention. In particular, an exemplary control flow 204 is depicted in FIG. 6, and will be described further below in connection therewith in accordance with an exemplary embodiment of the present invention. Also, an exemplary language 206, namely a standard communication language including a diagnostic vector, a prognostic vector, a life usage vector, and a state vector, is depicted in FIG. 5, and will be described further below in connection therewith in accordance with an exemplary embodiment of the present invention. In addition, the control flow 204 and the language 206, along with the elements 202 of the protocol 200, may also be implemented in connection with a control process, such as the exemplary process depicted in FIG. 4 and described further below in connection therewith in accordance with an exemplary embodiment of the present invention. The elements 202 will now be described in connection with FIG. 3, also in accordance with an exemplary embodiment of the present invention.

FIG. 3 is a functional block diagram of the elements 202 of the protocol 200 of FIG. 2, in accordance with an exemplary embodiment of the present invention. The elements 202 of the protocol 200 include an executive 304, a runner 306, an internal data access interface 308, and a wrapper 310. In certain embodiments, the elements 202 of the protocol 200 may also include a logging interface 312 and a cache 314. among other possible elements. The executive 304 provides a point of entry for executing various diagnostic and prognostic algorithms 116 included within a diagnostics and prognostics manager. In a preferred embodiment, the executive 304 provides a single point of entry for executing the various diagnostic and prognostic algorithms 116 included within the diagnostics and prognostics manager.

Additionally, the executive 304 receives data or other information, preferably from an external source. The external source may include, by way of example only, a database, a sensor (e.g. a sensor disposed within or in proximity to a vehicle system being examined), a an enterprise, device, or a human being, among various other different types of possible external sources. Also in certain embodiments two or more external sources may be utilized.

In a preferred embodiment, the data received by the executive 304 comprises a data packet that includes measurements collected from a corresponding system or sub-system of a vehicle being examined for diagnostics or prognostics, such as a vehicle system. In a preferred embodiment, the system being examined comprises an aircraft. However, in other embodiments, the system being examined may comprise any number of different types of vehicles and/or other devices and/or systems, and/or combinations thereof.

The executive 304 also accepts various diagnostic and prognostic requests pertaining to the system being examined. In a preferred embodiment, the executive 304 accepts the diagnostic and prognostic requests from an outside requestor, such as an individual or computer system involved with operating or maintaining the system being examined. However, the requestor may take various different forms. Also in a preferred embodiment, the executive 304 accepts three requests from the requestor, namely an initialization request, a processing request, and a reset request. Also in a preferred embodiment, the executive 304 selects a runner 306 based at least in part on the nature of the request. In one such preferred embodiment, the executive includes a selector 305 to at least facilitate selection of the runner 306, as is depicted in FIG. 3.

The runner 306 sequences the execution of various diagnostic and prognostic algorithms 116 included within a diagnostics and prognostics manager. In the depicted embodiment, the runner 306 includes a sequencer 307 to at least facilitate the sequencing of the various diagnostic and prognostic algorithms 116. In a preferred embodiment, the runner 306 reads a sequence of various diagnostic and prognostic algorithms 116 using a set of internal data access methods. Also in a preferred embodiment, the runner 306 reads the sequence of diagnostic and prognostic algorithms 116 in a predetermined sequence.

The wrapper 310 encapsulates or comprises one or more diagnostic and/or prognostic algorithms 116. In a preferred embodiment, the wrapper 310 represents a primary or main computational engine of the protocol 200. Also in a preferred embodiment, the wrapper 310 encapsulates one or more diagnostic and/or prognostic algorithms 116 included within a diagnostics and prognostics manager, such as in a vehicle health monitoring system. Most preferably, the wrapper 310 encapsulates a single diagnostic or prognostic algorithm 116 included within such a diagnostics and prognostics manager. However, this may vary in other embodiments.

Also, preferably the wrapper 310 reads the diagnostic and prognostic algorithms 116 and any related parameters using a set of internal data access methods. In a preferred embodiment, a set of internal data access methods provides a single access point to local configuration data. The local configuration data may be stored within a private database or computer files using a proprietary format, although this may also vary in other embodiments of the present invention.

As referenced above, in certain embodiments, the protocol 200 may also include a logging interface 312 and a cache 314. The logging interface 312 provides a common interface for streaming messages from various runners 306, wrappers 310, and the executive 304. The cache 314 provides in-memory caching for rapid storage and/or exchange of information (preferably including a diagnostic vector, a prognostic vector, a state vector, and a life usage vector of a standard communication language, such as that depicted in FIG. 5 and described further below in connection therewith in an exemplary embodiment of the present invention) within successive algorithm 116 execution contained in a wrapper 310 and runner 306. It will be appreciated that multiple logging interfaces 312 and/or caches 314 may also be used in certain embodiments. The protocol 200, and the various systems, program products, and computer systems that can be used in connection therewith, can also be used in connection with various diagnostic and prognostic processes, such as the above-referenced control flow process, which will now be described in greater detail below.

FIG. 4 is a flowchart of a control process 400 for performing diagnostics on a system or a sub-system of a vehicle, in accordance with an exemplary embodiment of the present invention. The control process 400 can be implemented in connection with the computer system 100 of FIG. 1 and/or the protocol 200 of FIGS. 2 and 3, in accordance with an exemplary embodiment of the present invention. In an exemplary embodiment, the control process 400 may also be executed by a program product or software implementing these steps in connection with a computer system, such as the exemplary computer system 100 described above in connection with FIG. 1. In the depicted embodiment, the control process 400 begins with step 402, in which a request is received from a requestor, preferably form an external source. In a preferred embodiment, the request is received by an executive, such as the executive 304 of FIG. 3.

In a preferred embodiment, various diagnostic and prognostic requests are received by the executive in step 402. Also in a preferred embodiment, each such diagnostic or prognostic request pertains to a system or sub-system of a vehicle being examined. In a preferred embodiment, the executive 304 accepts the diagnostic and prognostic requests from an outside requestor, such as an individual or computer system involved with operating or maintaining the system being examined. However, the requestor may take various different forms. Also in a preferred embodiment, the executive 304 accepts three requests from the requestor, namely an initialization request, a processing request, and a reset request. The request may comprise a request to initialize, process, or reset one or more diagnostic and/or prognostic processes or algorithms 116, among other possible requests. The external source may include, by way of example only, an enterprise, device, or a human being, among various other different types of possible external sources. In certain embodiments two or more external sources may be utilized.

In addition, data is obtained relevant to the request (step 404). In a preferred embodiment, the data received by the executive 304 comprises a data packet that includes measurements collected from a corresponding system or sub-system of a vehicle being examined for diagnostics or prognostics, such as a vehicle system. In a preferred embodiment, the system being examined comprises an aircraft. However, in other embodiments, the system being examined may comprise any number of different types of vehicles and/or other devices and/or systems, and/or combinations thereof.

In certain embodiments, the data packet and/or other data may be obtained from the memory 104 or otherwise within the computer system 100 and/or the protocol 200. In certain other embodiments, the data may be obtained from one or more other external sources, which may be the same or different from the external source(s) from which the request is received. For example, such one or more external sources may include, by way of example only, a database, a sensor (e.g. a sensor disposed within or in proximity to a vehicle system being examined), a an enterprise, device, or a human being, among various other different types of possible external sources. Also in certain embodiments two or more external sources may be utilized.

In addition, a runner is selected, such as the runner 306 of FIG. 3 (step 406). In a preferred embodiment, the runner is selected by the executive, such as the executive 304 of FIG. 3. Preferably the runner 306 is selected based at least in part on the nature of the request received in step 402. However, this may vary in other embodiments. For example, in certain embodiments, a particular type of runner may be used in conjunction with a number of different types of requests.

One or more algorithms and/or wrappers are also selected, such as the algorithms 116 of FIGS. 1 and 2 and/or the wrapper 310 of FIG. 3 (step 408). Preferably the runner makes this selection along with an accompanying request for one or more algorithms 116 and/or wrappers 310 to the internal data access interface 308 of FIG. 3. In one preferred embodiment, the runner 306 does so by invoking a method on the internal data access interface 308. In addition, in certain embodiments, the internal data access interface 308 also provides an assurance that the selection and request from the runner 306 are fulfilled correctly.

In a preferred embodiment, the one or more algorithms and/or wrappers are also selected based on the type of request received in step 402. As mentioned above, the wrapper 310 encapsulates or comprises one or more diagnostic and/or prognostic algorithms 116. Also as mentioned above, in a preferred embodiment, the wrapper 310 represents a primary or main computational engine of the protocol 200, and encapsulates one or more diagnostic and/or prognostic algorithms 116 included within a diagnostics and prognostics manager, such as in a vehicle health monitoring system. Most preferably, the wrapper 310 encapsulates a single diagnostic or prognostic algorithm 116 included within such a diagnostics and prognostics manager. However, this may vary in other embodiments.

The exaction of the algorithms and/or wrappers are then sequenced (step 410). In a preferred embodiment, the algorithms and/or wrappers are sequenced by the runner selected in step 406, such as the above-referenced runner 306 of FIG. 3. In a preferred embodiment, the runner 306 sequences the execution of various diagnostic and prognostic algorithms 116 included within a diagnostics and prognostics manager.

In addition, a logging interface status is obtained (step 412). In a preferred embodiment, the logging interface status pertains to a status of operation of one or more wrappers 310 and/or algorithms 116 in accordance with the logging interface 312 of FIG. 3. In one preferred embodiment, the logging interface status may be obtained by the executive 304 of FIG. 3 and/or the runner 306 via one or more methods. In other embodiments, the logging interface status may be obtained by one or more of the wrappers 310 and/or one or more other elements 202 of the protocol 200 of FIGS. 2 and 3. In addition, in certain embodiments, different logging interface statuses are requested by different elements 202 of the protocol 200 (such as the executive 304 and the runner 306, in one preferred embodiments) at different points in time during execution of the control process 400.

The request(s) are then executed (step 414). In a preferred embodiment, the request(s) are executed via operation and/or execution of the wrappers and/or algorithms encapsulated therein, such as the algorithms 116 of FIGS. 1 and 3 and the wrapper 310 of FIG. 3. The requests are preferably executed in this manner utilizing the data obtained in step 404. In a preferred embodiment, such execution is performed at least in part through instruction, oversight, and/or sequencing by the runner, such as the runner 306 of FIG. 3. In a preferred embodiment, in so doing, the runner 306 reads a sequence of various diagnostic and prognostic algorithms 116 and any related parameters using a set of internal data access methods. Also in a preferred embodiment, the runner 306 reads the sequence of diagnostic and prognostic algorithms 116 in a predetermined sequence. Also in a preferred embodiment, such set of internal data access methods provides a single access point to local configuration data. The local configuration data may be stored within a private database or computer files using a proprietary format, although this may also vary in other embodiments of the present invention.

Also in a preferred embodiment, the runner 306 utilizes a sequencer that executes each of the wrappers 310 in step 414, based on the request and the data previously received. During execution, the wrappers 310 may request a configuration parameter, for example by invoking one or more methods on the internal data access interface 308. In such event, the internal data access interface 308 preferably ensures that the requested parameter is provided to the appropriate wrapper 310 that has requested such parameter. In addition, the wrapper 310 may access a local cache 314 to rapidly access intermediate calculations during execution, in certain embodiments, and the wrapper 310 may also invoke a method on the logging interface 312 to report a status. Preferably, each wrapper 310 performs all required calculations within its respective diagnostic and prognostic algorithm 116.

Also in a preferred embodiment, execution of the request is verified (step 416). In one preferred embodiment, such verification is conducted by the runner, such as the runner 306 of FIG. 3. Also in a preferred embodiment, such verification is also facilitated by the executive, such as the executive 304 of FIG. 3. However, this may vary in other embodiments. For example, in certain embodiments, such verification may not be necessary, and/or may be conducted in whole or in part by one or more different components and/or systems. In a preferred embodiment, the runner 306 requests a sequence of wrappers 310, preferably by invoking a method pertaining to the internal data access interface 308. Also in a preferred embodiment, an internal data access interface, such as the internal data access interface 308 of FIG. 3, in turn, helps to ensure that requests from the runner 306 are fulfilled.

In addition, in certain embodiments, one or more predetermined calculations are performed (step 418). For example, in certain embodiments, the runner 306 may perform one or more predetermined calculations prior to execution of each of the wrappers 310, the algorithms 116, and/or the request(s), for example to help facilitate operation and/or execution of the wrappers 310, the algorithms 116, and/or the request(s) and/or to help verify the accuracy and/or completeness of such operation and/or execution. In other embodiments, the runner 306 perform such predetermined calculations after such execution of each of the wrappers 310, the algorithms 116, and/or the request(s) for similar reasons, instead of or in addition to performing such predetermined calculations beforehand. In yet other embodiments, such predetermined calculations may not be necessary, and/or may be conducted by another component, system, and/or device.

In certain embodiments, the executive 304 may in turn then perform its own predetermined calculations. For example, in one preferred embodiment, the executive 304 may perform its predetermined calculations following the predetermined calculations performed by the runner 306. However, this may vary in other embodiments.

Upon completion of these steps, the executive 304 then declares the process to be complete. A service is then generated (step 420) and provided to the requestor (step 422). In a preferred embodiment, the service comprises a report. The report generally utilizes a standard communication language that includes a plurality of vectors, such as the standard communication language depicted in FIG. 5 and described below in connection therewith. In various other embodiments, any number of other different types of services may be provided to the requestor.

It will be appreciated that certain steps of the control process 400 of FIG. 4 may vary. It will similarly be appreciated that certain steps of the control process 400 may not be necessary in certain embodiments, for example as described above. It will further be appreciated that certain steps of the control process 400 may be conducted simultaneously and/or in a different order than that depicted in FIG. 4 and/or described herein.

FIG. 5 is a functional block diagram of a standard communication language 500 that can be used in conjunction with the control process of FIG. 4, the protocol of FIGS. 2 and 3, and the computer system of FIG. 1, in accordance with an exemplary embodiment of the present invention. In a preferred embodiment, the standard communication language 500 of FIG. 5 corresponds to the language 206 of the protocol 200 depicted in FIG. 2.

In the depicted embodiment, the standard communication language 500 comprises a plurality of vectors comprising a diagnostic vector 502, a prognostic vector 504, a life usage vector 506, and a state vector 508. The plurality of vectors preferably defines the information exchange among all diagnostic and prognostic algorithms 116 included within a diagnostics and prognostics manager implementing the protocol 200. In one preferred embodiment, each of the diagnostic vector 502, the prognostic vector 504, the life usage vector 506, and the state vector 508 include a time stamp provided by the wrapper 310. Also, in a preferred embodiment, a cache, such as the cache 314 of FIG. 3, is configured to at least facilitate storing one or more of, and most preferably all of, the diagnostic vector 502, the life usage vector 506, the prognostic vector 504, and the state vector 508.

The diagnostic vector 502 expresses a belief or expectation as to the existence of one or more conditions defined for a corresponding system or sub-system. For example, in a preferred embodiment, the diagnostic vector 502 expresses such a belief or expectation based on a probability scale of values between zero and one, wherein zero implies absence of the condition.

The prognostic vector 504 expresses a belief or expectation about a future state or condition of the system or sub-system. For example, in a preferred embodiment, the prognostic vector 504 expresses a belief or expectation of an evolution or progression over time of one or more conditions pertaining to the corresponding system or sub-system. Also in a preferred embodiment, the prognostic vector 504 expresses such belief or expectation of the evolution or progression based on a metric scale of operating hours or operating cycles, or both. In addition, preferably the prognostic vector 504 expresses such belief or expectation also based on a probability scale of values between zero and one, where zero implies absence of the condition.

The life usage vector 506 expresses a measure of a consumed life of one or more consumables defined for the corresponding system or sub-system. In a preferred embodiment, the life usage vector 506 expresses a quantification or an estimate as to the measure of the consumed life of one or more life-limited components defined for the corresponding system or sub-system. The life usage vector 506 is also preferably expressed on a metric scale of operating hours or operating cycles, and on a percentage scale of values between zero and one hundred, with a value of one hundred implying that all such life has been consumed.

The state vector 508 expresses numerical values for one or more output generated by a diagnostic or prognostic algorithm 116. In a preferred embodiment, the state vector 508 expresses such values as defined using an engineering unit. Also in a preferred embodiment, such values expressed by the state vector 508 are restricted to within an upper and lower bound defined appropriately.

It will be appreciated that the standard communication language 500 may vary in other embodiments. For example, in certain embodiments, one or more of the diagnostic vector 502, the prognostic vector 504, the life usage vector 506, and the state vector 508 may vary. In addition, in certain embodiments, the standard communication language 500 may include only some of the above-referenced diagnostic vector 502, the prognostic vector 504, the life usage vector 506, and the state vector 508. For example, in one embodiment, the standard communication language 500 may include the diagnostic vector 502 and the life usage vector 506 but not the prognostic vector 504 and/or the state vector 508. In another embodiment, the standard communication language 500 may include the diagnostic vector 502, the life usage vector 506, and the prognostic vector 504 but not the state vector 508. Various other combinations of the diagnostic vector 502, the prognostic vector 504, the life usage vector 506, and the state vector 508 may also be used in different embodiments. However, in a preferred embodiment, the standard communication language 500 includes each of the above-described diagnostic vector 502, prognostic vector 504, life usage vector 506, and state vector 508.

FIG. 6 is a flowchart of a control flow 600 that can be implemented in connection with the computer system 100 and/or a program product implemented thereby or otherwise related thereto, the protocol 200 of FIGS. 2 and 3, the control process 400 of FIG. 4, and the standard communication language 500 of FIG. 5, in accordance with an exemplary embodiment of the present invention. In a preferred embodiment, the control flow 600 of FIG. 6 corresponds to the control flow 204 of the protocol 200 depicted in FIG. 2.

The control flow 600 is depicted in FIG. 6 in connection with the various elements 202 of the protocol 200 of FIGS. 2 and 3, including the executive 304, the runner 306, the internal data access interface 308, the wrapper 310, the logging interface 312, and the cache 314 thereof. The control flow 600 is further depicted in FIG. 6 in connection with illustrating various interactions between such elements 202 of the protocol 200 of FIGS. 2 and 3, for example in implementing the control process 400 of FIG. 4 and/or related processes and/or steps thereof.

As depicted in FIG. 6, the control flow 600 includes a transmission of a request 602 and a data packet 604 that are received by the executive 304. Preferably, the transmissions of the request 602 and the data packet 604 originate from a non-depicted, external source. However, this may vary in other embodiments.

In a preferred embodiment, the request 602 corresponds with step 402 of the control process 400 of FIG. 4. Accordingly, the request 602 may include various diagnostic and prognostic requests, for example pertaining to a system or sub-system of a vehicle being examined. The executive 304 may receive the request 602 from an outside requestor, such as an individual or computer system involved with operating or maintaining the system being examined, although the requestor may take various different forms. Also in a preferred embodiment, the request 602 may include three requests from the requestor, namely an initialization request, a processing request, and a reset request. The request may comprise a request to initialize, process, or reset one or more diagnostic and/or prognostic processes or algorithms 116. The external source may include, by way of example only, an enterprise, device, or a human being, among various other different types of possible external sources. In certain embodiments two or more external sources may be utilized.

Also in a preferred embodiment, the data packet 604 corresponds with step 404 of the control process 400 of FIG. 4. In a preferred embodiment, the data packet 604 includes measurements collected from a corresponding system or sub-system of a vehicle being examined for diagnostics or prognostics, such as a vehicle system of an aircraft. However, in other embodiments, this may vary. In certain embodiments, the data packet and/or other data may be obtained from the memory 104 or otherwise within the computer system 100 and/or the protocol 200. In certain other embodiments, the data packet 604 may be obtained from one or more other external sources, which may be the same or different from the external source(s) from which the request is received. For example, such one or more external sources may include, by way of example only, a database, a sensor (e.g. a sensor disposed within or in proximity to a vehicle system being examined), a an enterprise, device, or a human being, among various other different types of possible external sources. Also in certain embodiments two or more external sources may be utilized.

The control flow 600 continues with a selection 606 of a runner 306 by the executive 304, for example corresponding to step 406 of the control process 400 of FIG. 4. In the depicted embodiment, the selector 305 of the executive 304 selects the runner 306, based at least in part on the request 602, using the selector 305. However, this may vary in other embodiments.

Next, the executive 304 may obtain a logging interface status 608 from the logging interface 312, for example corresponding to step 412 of the control process 400 of FIG. 4. In a preferred embodiment, the logging interface status pertains to a status of operation of one or more wrappers 310 and/or algorithms 116 in accordance with the logging interface 312 of FIG. 3. In the depicted embodiment, the logging interface status 608 may be obtained by the executive 304 via one or more methods. In other embodiments, the logging interface status 608 may be obtained by one or more of the wrappers 310 and/or one or more other elements 202 of the protocol 200 at various stages or times during the control flow 600. However, this may vary in other embodiments.

In addition, the runner 306 makes a selection and request 610 for one or more algorithms 116 and/or wrappers 310 to the internal data access interface 308, for example corresponding to step 408 of the control process 400 of FIG. 4. Preferably, the runner 306 does so by invoking a method on the internal data access interface 308. In addition, preferably the internal data access method provides an assurance 612 that the selection and request 610 is fulfilled correctly.

Next, the runner 306 may also obtain a logging interface status 614 from the logging interface 312, for example also corresponding to step 412 of the control process 400 of FIG. 4. In a preferred embodiment, the logging interface status 614 pertains to a status of operation of one or more wrappers 310 and/or algorithms 116 in accordance with the logging interface 312 of FIG. 3. In the depicted embodiment, the logging interface status 614 may be obtained by the runner 306 via one or more methods. In other embodiments, the logging interface status may be obtained by one or more of the wrappers 310 and/or one or more other elements 202 of the protocol 200. However, this may vary in other embodiments.

In certain embodiments, the runner 306 may perform one or more predetermined calculations 618, for example corresponding to step 418 of the control process 400 of FIG. 4. For example, in certain embodiments, the runner 306 may perform one or more predetermined calculations 618 to help facilitate operation and/or execution of the wrappers 310, the algorithms 116, and/or the request(s) and/or to help verify the accuracy and/or completeness of such operation and/or execution.

In addition, the runner 306 conducts a sequence and execution direction 620 of the wrappers 310, for example corresponding to step 410 of the control process 400 of FIG. 4. In a preferred embodiment, the execution of the wrappers 310 is sequenced by the runner 306, while the execution of the wrappers 310 is directed by the sequencer 307 of the runner 306. However, this may vary in other embodiment. The request(s) are thus executed by the wrappers 310, for example corresponding to step 414 of the control process 400 of FIG. 4, preferably under the direction of the runner 306.

As part of its execution, each wrapper 310 may request a confirmation parameter by invoking a method 622 on the internal data access interface 308, as shown in FIG. 6. The internal data access interface 308 in turn may provide an assurance 624 that any requested parameters have been provided to the wrapper 310, for example corresponding to step 416 of the control process 400 of FIG. 4, also as shown in FIG. 6.

In addition, the wrapper 310 may invoke access 626 to the cache 314, for example to rapidly access intermediate calculations of the wrapper 310. The wrapper 310 may also seek a logging interface status 628 from the logging interface 312, for example corresponding to step 412 of the control process 400 of FIG. 4. Moreover, each wrapper 310 may also perform various calculations 632 that are contained with its diagnostic and prognostic algorithms 116, for example as part of the execution in correspondence with step 414 of the control process 400 of FIG. 4. In certain embodiments, each wrapper 310 may perform all such calculations 632 that are contained within its diagnostic and prognostic algorithm 116.

Next, after each of the wrappers 310 have completed their calculations 632, the runner 306 may perform additional predetermined calculations 634, such as those described above, and for example also corresponding to step 418 of the control process 400 of FIG. 4. However, this may vary in certain embodiments.

The runner 306 then returns control back to the executive 304. The executive 304 may then perform its own predetermined calculations 636, for example such as those described above, and for example also corresponding to step 418 of the control process 400 of FIG. 4. Upon completion of these steps, the executive 304 determines that execution is deemed to be complete.

Once the execution steps are deemed to be complete, a report 638 is then generated and provided to the requestor or other user, for example corresponding to steps 420 and 422 of the control process 400 of FIG. 4. Preferably, the report 638 utilizes a standard communication language that includes a plurality of vectors, such as the standard communication language 500 of FIG. 5 described above. As provided in greater detail above in connection with FIG. 5, the report 638 preferably utilizes a standard communication language with a diagnostic vector 502, a prognostic vector 504, a life usage vector 506, and a state vector 508 having the functions described above.

It will be appreciated that the standard communication language may vary in certain embodiments. It will also be appreciated that other aspects of the control flow 600 may also vary. For example certain aspects for the control flow 600 may be conducted at least in part by one or more other components of the protocol 200 and/or other systems and/or devices. It will similarly be appreciated that certain aspects of the control flow 600 may be performed simultaneously or in a different order than that depicted in FIG. 6 and/or described above in connection therewith, among other possible variations involving the control flow 600.

The computer system 100, the protocol 200, the advanced algorithm framework 114, the control process 400, the control flow 600, and/or the communications flow 700 (and the software, program products, and/or other implementations thereof) may also be implemented in connection with or as part of a health monitoring system, for example for a vehicle system, that includes a presentation layer, a telematics and diagnostics network, an enterprise service bus, a plurality of interfaces, an operational support system, and an enterprise system. In one preferred embodiment, such a health monitoring system can be used in connection with an aircraft or a fleet of aircraft. In another embodiment, the health monitoring system can be used in connection with an automobile or a fleet of automobiles. In yet another embodiment, the health monitoring system can be used in connection with a locomotive or a fleet of locomotives. In other embodiments, the health monitoring system can be used in connection with various other different types of vehicles or vehicle systems and/or combinations of any of these and/or other different types of vehicles and/or vehicle systems. In yet other combinations, the health monitoring system can be used in connection with any number of other different types of devices and/or systems.

The operational support system of such a vehicle health monitoring system may include a plurality of diagnostics and prognostics managers and reasoners pertaining to different systems or sub-systems of the vehicle. For example, an aircraft system application may comprise various systems and/or sub-systems for an environmental control system (ECS), an electrical power system (EPS), propulsion, and an auxiliary power unit (APU), among various others, by way of example only. However, the computer system 100, the protocol 200, the advanced algorithm framework 114, the control process 400, the control flow 600, and/or the communications flow 700 (and the software, program products, and/or other implementations thereof) can also be used or implemented in connection with any number of other different types of systems, devices, software, program products, computer systems, devices, and the like.

Accordingly, an improved method is provided for performing or facilitating diagnostics or prognostics, for example that allows for easier modularity and/or configuration and/or improved performance. In addition, an improved system is also provided for performing or facilitating diagnostics or prognostics, for example that allows for easier modularity and/or configuration and/or improved performance. An improved program product is further provided for performing or facilitating diagnostics or prognostics, for example that allows for easier modularity and/or configuration and/or improved performance.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims and their legal equivalents.

## Claims

1. A method (400) for performing diagnostics on a system of a vehicle, the method (400) comprising the steps of:
receiving a request form an external source;
obtaining data relevant to the request;
processing the request using the data ; and
generating a report (500) based at least in part on the processing of the request,
the report (500) comprising:
a diagnostic vector (502) comprising diagnostic information for the system based at least in part on the processing of the request; and
a life usage vector (506) (506) comprising information as to usage of the system throughout a life history of the system, based at least in part on the processing of the request.

2. The method (400) of Claim 1, further comprising the steps of:
selecting an algorithm (116) based at least in part on the request, the algorithm (116) configured to execute the request using the data; and
verifying that that the request has been executed by the algorithm (116).

3. The method (400) of Claim 1, further comprising the step of:
generating the report (500) based at least in part on the processing of the request, the report (500) further comprising a prognostic vector (504) expresses a belief or expectation about a future state or condition of the system and a state vector (508) comprising numerical values for one or more output generated by an algorithm (116).

4. The method (400) of Claim 1, further comprising the steps of:
selecting a plurality of algorithms (116) based at least in part on the request, the plurality of algorithms (116) configured to execute the request using the data; and
sequencing execution by the plurality of algorithms (116) in accordance with a predetermined sequence.

5. A program product (100, 112, 118) for performing diagnostics on a system of a vehicle, the program product (100, 112, 118) comprising:
a program (112) configured to at least facilitate:
receiving a request form an external source;
obtaining data relevant to the request;
processing the request using the data; and
generating a report (500) based at least in part on the processing of the request, the report (500) comprising:
a diagnostic vector (502) comprising diagnostic information for the system based at least in part on the processing of the request; and
a life usage vector (506) comprising information as to usage of the system throughout a life history of the system, based at least in part on the processing of the request; and
a computer-readable signal-bearing media (118) bearing the program (112).

6. The program product (100, 112, 118) of Claim 5, wherein the program (112) is further configured to at least facilitate:
selecting an algorithm (116) based at least in part on the request, the algorithm (116) configured to execute the request using the data; and
verifying that that the request has been executed by the algorithm (116).

7. The program product (100, 112, 118) of Claim 5, wherein the report (500) further comprises a prognostic vector (504) expresses a belief or expectation about a future state or condition of the system and a state vector (508) comprising numerical values for one or more output generated by an algorithm (116).

8. A computer system (100) for a health maintenance system for a system of a vehicle, the computer system (100) comprising:
an interface (108) configured to at least facilitate receiving a request form an external source; and
a processor (102) configured to at least facilitate:
obtaining data relevant to the request;
processing the request using the data; and
generating a report (500) based at least in part on the processing of the request, the report (500) comprising:
a diagnostic vector (502) comprising diagnostic information for the system based at least in part on the processing of the request; and
a life usage vector (506) comprising information as to usage of the system throughout a life history of the system, based at least in part on the processing of the request.

9. The computer system (100) of Claim 8, wherein the processor (102) is further configured to at least facilitate:
selecting an algorithm (116) based at least in part on the request, the algorithm (116) configured to execute the request using the data; and
verifying that that the request has been executed by the algorithm (116).

10. The computer system (100) of Claim 8, wherein the report (500) further comprises a prognostic vector (504) configured to express a belief or expectation about a future state or condition of the system and a state vector (508) comprising numerical values for one or more output generated by an algorithm (116).
